# EUROPEAN PATENT APPLICATION

(11) **EP 4 789 934 A1**
(43) Date of publication of application: **12.08.2026**
(21) Application number: 25156804.4
(22) Date of filing: 10.02.2025
(51) Int. Cl.: B60T 17/00, B01D 53/26

(54) **TWIN CHAMBER AIR DRYER FOR A PNEUMATIC SYSTEM OF A COMMERCIAL VEHICLE**

(71) Applicant: ZF CV Systems Europe BV, 1170 Brüssel (BE)
(72) Inventor: OLSZEWSKI, Jakub, 50-513 Wroclaw (PL); SEMENIUK, Maciej, 58-506 Jelenia Gora (PL)
(74) Representative: Copi, Joachim

(57) **Abstract**

The invention refers to a twin chamber air dryer (1) for a pneumatic system of a commercial vehicle, said twin chamber air dryer (1) comprising:
a casing (14),
a supply inlet (101) to be connected to a compressor,
a spool valve comprising a first spool valve outlet (17) to be connected to a first cartridge inlet of a first cartridge and a second spool valve outlet (18) to be connected to a second cartridge inlet of a second cartridge,
wherein a first air passage (32) is connecting said supply inlet (101) to said first spool valve outlet (17), and a second air passage (33) is connecting said supply inlet (101) to said second spool valve outlet (18),
wherein in a basic condition, said first air passage (32) is open and said second air passage (33) is closed, to form a first supply mode through said first cartridge, and wherein in an actuated condition said second air passage (33) is open and said first air passage (32) is closed, to form a second supply mode through said second cartridge,
wherein in a high inlet pressure situation with an inlet pressure at said supply inlet (101) above a pressure threshold, said supply inlet (101) is connected to said first spool valve outlet (17) and to said second spool valve outlet (18).

## Description

The invention refers to a twin chamber air dryer for a pneumatic system of a commercial vehicle and the pneumatic system of the commercial vehicle.

### Background of the invention

Pneumatic or electro-pneumatic systems in commercial vehicles generally comprise a compressor, an air dryer unit for drying and filtering the compressed air delivered by the compressor, a multi-circuit protection valve, and pneumatic consumer circuits supplied with the dried compressed air, wherein the pneumatic consumer circuits in particular include pneumatic brake circuits and air suspension systems. Twin chamber air dryer comprise two desiccant cartridges filled with moisture-adsorbing materials like granulate. The compressed air is dried or de-moisturized in a supply mode, and the dried compressed air is then supplied to the connected consumer circuits. The desiccant cartridge is afterwards regenerated or purged in a regeneration mode, in which air flows in the reverse direction through the desiccant cartridge to a venting outlet.

In twin chamber air dryers, the two desiccant cartridges are operated in alternating operation modes. In a first operation mode, the compressed air flows through the first desiccant cartridge to a supply outlet and the second desiccant cartridge is purged. Afterwards, a control unit switches into a second operation, in which the air streams are reversed, thereby using the second desiccant cartridge in supply mode for drying or de-moisturizing the compressed air and purging the first desiccant cartridge in regeneration mode.

A problem with twin chamber air dryers is pressure peaks at the supply inlet. These pressure peaks can occur between a passive state and an active state of the compressor, where the passive state can be a switch-off condition or an idle state of the compressor. In the event of such a pressure peak, the spool valve and its control parts, in particular one, two or more control pistons in said spool valve, can be pushed and displaced, in particular against the spring load of the spool valve. This situation can lead to an interruption of the pressure supply, since both outlets of the spool valve to the two cartridges can be closed and vented.

In the event of such a pressure peak, the internal control means, in particular control pistons of the spool valve, must be moved back into their correct position and an air passage between the spool valve and one of the cartridges must be pressurized in order to re-stablish the air supply. However, these pauses can be too long for a continuous air supply.

It is therefore an object of the invention to provide a twin chamber air dryer and an electro-pneumatic system comprising such a twin chamber air dryer, which provides a steady supply of compressed air with reduced drawbacks.

According to the invention, a twin chamber air dryer and an electro-pneumatic system according to the independent claims are provided. Furthermore, a pneumatic system comprising the twin chamber air dryer is provided.

According to the invention, a twin chamber air dryer for a pneumatic system of a commercial vehicle is provided, said twin chamber air dryer comprising:
a casing, a supply inlet to be connected to a compressor, a spool valve comprising a first spool valve outlet to be connected to a first cartridge inlet of a first cartridge and
a second spool valve outlet to be connected to a second cartridge inlet of a second cartridge,
wherein a first air passage is connecting said supply inlet to said first spool valve outlet, and a second air passage is connecting said supply inlet to said second spool valve outlet,
wherein in a basic condition, said first air passage is open and said second air passage is closed, to form a first supply mode through said first cartridge, and wherein in an actuated condition said second air passage is open and said first air passage is closed, to form a second supply mode through said second cartridge,
wherein in a high inlet pressure situation with an inlet pressure at said supply inlet above a pressure threshold, said supply inlet is connected to said first spool valve outlet and to said second spool valve outlet.

Thus, the twin chamber air dryer realises the function of the spool valve by a piston combination of two contacting or abutting pistons contained in a common valve chamber, wherein both pistons are pushable or displaceable along a common piston axis. The pistons are spring loaded by a load spring and controlled by a control port, in particular a pneumatic control port, which pushes the piston combination against the spring load along said piston axis.

The pistons are preferably made of a plastic material, in particular by an injection moulding process. This allows a cost-saving and light production.

The pistons are preferably hollow, with interior piston chambers used for the air flow. The air flow through the interior piston chambers can be connected to the external passages and chambers between the pistons and an inner wall of the casing surrounding the valve chamber.

Therefore, these pistons can be switched between their valve positions; in a first position or basic position of the spool valve, the supply inlet which is connected to the compressor, is connected to a first spool valve outlet and to the first cartridge, the second cartridge being vented via the spool valve. By pushing said piston combination through said control port, both pistons are pushed against the spring load of said load spring into the second valve position with reversed connections (switched connections). These valve positions are preferably realised by air passages which are closed and opened by the pistons. In particular, the air passages can be formed between said pistons and a casing of said twin chamber air dryer. Furthermore, the air passages can be formed between the interior piston chambers and the inner wall of the valve chamber. This allows for a wide variety of possible airflow connection designs.

According to a preferred embodiment, the supply inlet is connected to a central valve chamber area within said valve chamber, and said central valve chamber area is connectable via said first air passage to said first spool valve outlet, and via said second air passage to said second spool valve outlet. The central valve chamber area is preferably provided around the contacting inner faces and the air passages are preferably provided laterally outwards relative to the central valve chamber area. Thus, when said central valve chamber area is pressurized with a pressure peak above the pressure threshold, the pressure peak acts on both pistons, the first piston being pressed against the control port or in the direction of the control port and the second piston being pressed against a spring load or spring force of the load spring. This piston arrangement offers a simple design, in particular with two pistons contained in a common valve chamber of substantially cylindrical shape, with a high degree of safety, since a pressure peak acts upon both pistons and pushes both pistons into their closed position.

The invention is hereinafter explained in more detail with reference to the accompanied drawings, in which:
- Fig. 1: is a cross-sectional view of a twin chamber air dryer according to a first embodiment in a first supply mode;
- Fig. 2: a block diagram of the device of Fig. 1;
- Fig. 3: the twin chamber air dryer of Fig. 1 in the event of a pressure peak at the inlet port;
- Fig. 4: a block diagram of Fig. 3;
- Fig. 5: a block diagram of a twin chamber air dryer with further pneumatic elements.

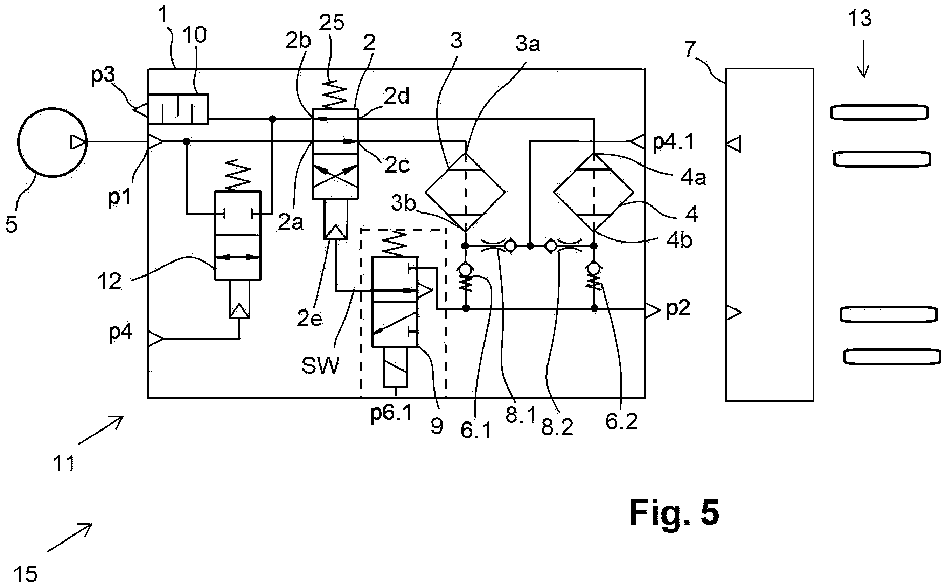

Fig. 5 shows a pneumatic scheme of a pneumatic system 11 of a commercial vehicle 15 with a twin chamber air dryer 1 according to an embodiment of the invention. The twin chamber air dryer 1 comprises a supply inlet p1 to be connected to a compressor 5, a supply outlet p2 to be connected to a multi-circuit protection valve 7, a venting outlet p3, a first pneumatic control port p4, a regeneration port p4.1 to be connected to the multi-circuit protection valve 7, and a second control port p6.1. Pneumatic consumer circuits 13 are connected to the multi-circuit protection valve 7. A spool valve 2 is realised as a pneumatically controlled, spring-loaded 4/2 valve connected between the supply inlet p1 and a first cartridge inlet p3a of a first cartridge 3, as well as a second cartridge inlet 4a of a second cartridge 4. A first cartridge outlet 3b is connected to the supply outlet p2 via a first check valve 6.1, and the second cartridge 4 is connected with its second cartridge outlet 4b to the supply outlet p2 via a second check valve 6.2. The regeneration port p4.1 is connected to the cartridge outlets 3b, 4b via a first check valve-throttle assembly 8.1, and a second throttle-check valve arrangement 8.2, respectively. A spring loaded 3/2 regeneration valve 9 is connected between the supply outlet p2 and a pneumatic control 2e of the spool valve 2. The regeneration valve 9 serves to switch the spool valve 2 between the first supply mode for supplying compressed air via the first cartridge 3 and a second supply mode for supplying compressed air via the second cartridge 4 to the supply outlet p2.

The twin chamber air dryer 1 is switched between two supply modes, wherein one of the cartridges 3, 4 is in a supply condition and the other cartridge 4, 3 is in regeneration condition. In the depicted basic state, the compressor 5 provides compressed air to the supply inlet p1 and a first port 2a of the spool valve 2, which, in its shown position, transfers the compressed air to the first cartridge inlet 3a. The compressed air is dried and processed in the first cartridge 3 and transferred to the supply outlet p2 via the first check valve 6.1. In the first supply mode shown, compressed air from the multi-circuit protection valve 7 is fed via the regeneration port p4.1 and the second check valve-throttle assembly 8.2 to the second cartridge outlet 4b of the second cartridge 4. The first check valve-throttle assembly 8.1 blocks the compressed air as the first cartridge outlet 3b is pressurized. The compressed air from the regeneration port p4.1 is transferred to the second check valve-throttle assembly 8.2, the second cartridge outlet 4b and the cartridge 4 to its second cartridge inlet 4a, thereby spooling and drying the second cartridge 4. The compressed air then passes through the spool valve 2 and a silencer 10 to the venting outlet p3. A control unit (not shown) switches the twin chamber air dryer 1 from the first supply mode shown to the second supply mode by controlling the regeneration valve 9 via its control port p6.1. The regeneration valve 9 switches into its activated position and compressed air from the area between the supply outlet p2 and the check valve 6.1, 6.2 flows through the open regeneration valve 9 to the pneumatic control 2e of the spool valve 2, thereby switching the spool valve 2 to its activated position, in which the connection between the pneumatic spool valve ports 2a, 2b on one side and the pneumatic spool valve ports 2c, 2d on the other side of the spool valve 2 are interchanged, thereby switching the function of the cartridges 3, 4 from the supply condition to the regeneration condition and vice versa.

An additional functional valve 12, realised as a spring-loaded 2/2 blocking valve, can be connected between the supply inlet p1 and the venting outlet p3 for cleaning or demoisturising the silencer 10 and an outlet area by means of compressed air from the compressor 5 supplied at the supply inlet 1.

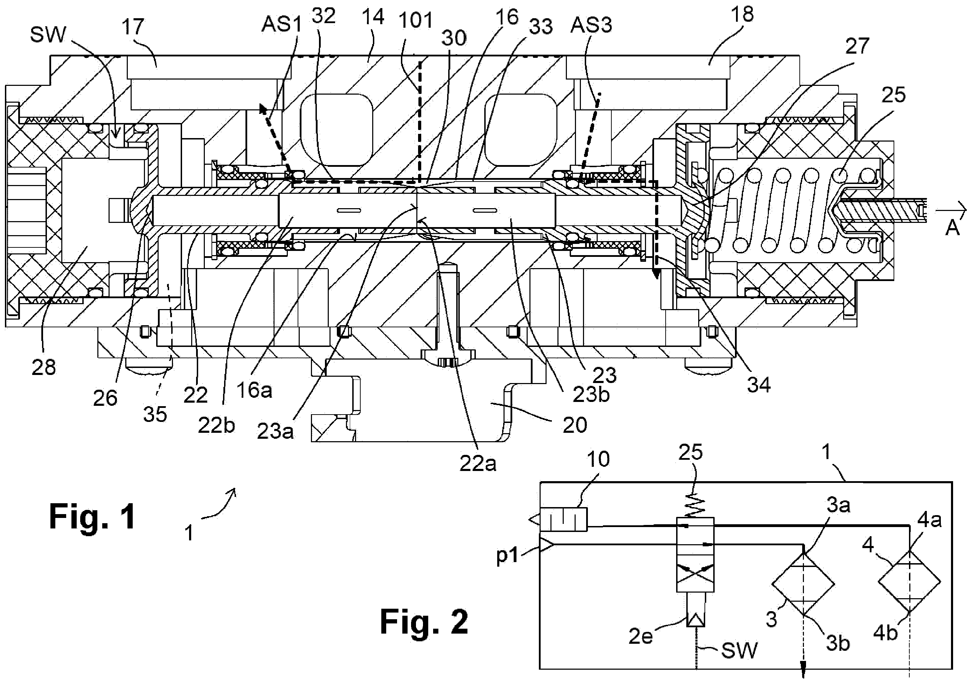

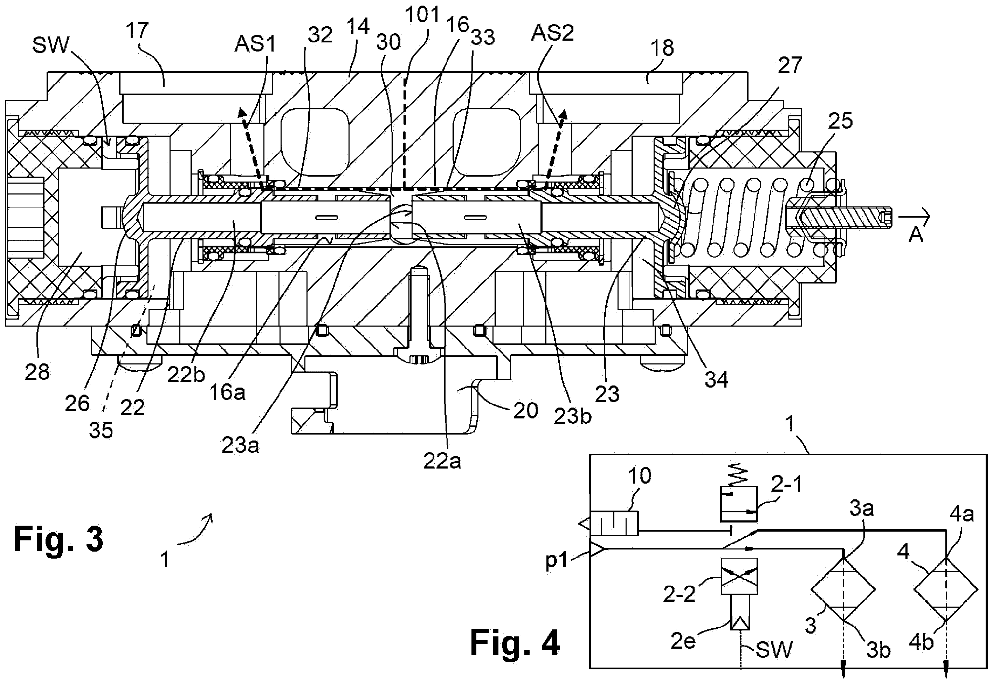

This pneumatic scheme of Fig. 5 is realised in the hardware equipment of Fig. 1 and 3, where additional pneumatic schemes of Fig. 2 and 3 explain the status of the device conditions of Fig. 1 and Fig. 3, respectively.

An embodiment of a twin chamber air dryer 1 is depicted in Fig. 1 and 3. The twin chamber air dryer 1 comprises a casing 14, an inlet port 101, which is not shown directly in the cross-section but is indicated by dashed lines, to be connected to the compressor 5, a valve chamber 16 connected to the inlet port 101, a first spool valve outlet 17 and a second spool valve outlet 18, and a venting outlet 20. The valve chamber has a substantially cylindrical shape and extends through the casing 14 along a lateral piston axis A. A first piston 22 and a second piston 23 are contained in the valve chamber 16 and push against each other at their front faces 22a and 23a. This piston combination 22, 23 is contained and slidingly mounted in the valve chamber 16 and displaceable along the lateral piston axis A. In Fig. 1, the piston combination 22, 23 is spring-loaded in the left direction by a load spring 25 acting on an outer end 27 of the second piston 23. At the left end 26 of the first piston 22, there is a control air chamber 28 which, by contacting the piston combination 22, 23, pushes the piston combination 22, 23 against the force of the load spring 25. The control air chamber 28 is controlled by a pneumatic control signal SW and acts as the pneumatic control 2e of Fig. 5. In Fig. 1, the control air chamber 28 is not pressurized with compressed air, so the load spring 25 is in its relaxed state. A central valve chamber area 30 of the valve chamber 16 surrounds the middle portion of the piston combination 22, 23, where the pistons 22 and 23 contact each other.

In the basic condition shown, which corresponds to the basic first supply mode of Fig. 5, the inlet 101 is connected to the central valve chamber area 30, and the central valve chamber area 30 is connected to the first spool valve outlet 17 via a first air passage 32, and a first supply air stream AS1, indicated by a dashed arrow, flows from the inlet 101, through the central valve chamber area 30, and the first air passage 32, to the first spool valve outlet 17, corresponding to the air flow of Fig. 5. The air passages 32, 33 can be formed between the pistons 22, 23 and an inner wall 16a of the valve chamber 16. In particular, the pistons 22, 23 can be hollow, and an interior first piston chamber 22b of the first piston 22 and an interior second piston chamber 23b of the second piston 23 can be used for the air flows. Thus, the first air passage 32 can be formed between the interior first piston chamber 22b and the inner wall 16a, and/or the second air passage 33 can be formed between the interior first piston chamber 23b and the inner wall 16a.

In this basic position of the piston combination 22, 23, the central valve chamber area 30 is thus connected to the first spool valve outlet 17, and a second air passage 33 extending from the central valve chamber area 30 to the second spool valve outlet 18 is blocked by the second piston 23. In this situation, the second spool valve outlet 18 is connected to the venting outlet 20 via a second regeneration air passage 34, and a regeneration air stream AS3 is formed.

When the pneumatic control signal SW is applied and the control air chamber 28 is pressurized with compressed air, the piston combination 22, 23 is pushed to the right, against the load spring 25. In this position, the air passages are reversed; the central valve chamber area 30 is thus connected via the second air passage 33 to the second spool valve outlet 18, thereby creating a second supply air stream AS2, and, correspondingly, the first spool valve outlet 17 is connected to the venting outlet 20 via a first regeneration air passage 35.

The twin chamber air dryer 1 of Fig. 1 thus realises the function of the spool valve 2; furthermore, the twin chamber air dryer 1 realises, see Fig. 5, the pneumatic line between the supply inlet p1 and the first spool port 2a, the pressure line between the spool port 2c and the first cartridge inlet 3a, the air passage from the silencer 10 to the spool port 2b, and the pressure line between the spool port 2d and the second cartridge inlet 4a, as well as the pneumatic line between the control air chamber 28 and the regeneration valve 9.

Furthermore, the twin chamber air dryer 1 provides a safety function in the event of a pressure peak at the inlet 101, as shown in Fig. 3. In the event of such a pressure peak with an inlet pressure at the inlet 101 above a pressure threshold pth, the pressure in the central valve chamber area 30 increases rapidly, and the spring force of the load spring 25 may be overcome, resulting in unintended movement of the pistons 22, 23. In this situation, however, both pistons 22, 23 are pushed in a lateral direction along the lateral piston axis A away from the central valve chamber area 30 and away from each other. The first piston 22 is pushed to the left and the second piston 23 is pushed to the right, against the spring force of the load spring 25. This movement opens both air passages 32, 33 and therefore connects the central valve chamber area 30 to both outlets, the first spool valve outlet 17 and the second spool valve outlet 18. In Fig. 4, this functionality is indicated by spool valve parts 2-1 and 2-2. Consequently, both cartridges 3 and 4 are connected to the supply inlet p1, and the first supply air stream AS1 and the second supply air stream AS2 are formed, thereby supplying both spool valve outlets 17 and 18 and therefore both cartridges 3, 4 with compressed air. The multi-circuit protection valve 7 and the pneumatic consumer circuits 13 connected to it are therefore still supplied with compressed air.

### List of reference numerals (part of the description)

- 1: twin chamber air dryer
- 2: spool valve
- 2a, 2b, 2c, 2d: pneumatic spool valve ports
- 2e: pneumatic control of the spool valve 2
- 2-1, 2-2: functional spool valve parts
- 3: first cartridge
- 3a: first cartridge inlet
- 3b: first cartridge outlet
- 4: second cartridge
- 4a: second cartridge inlet
- 4b: second cartridge outlet
- 5: compressor
- 6.1: first check valve
- 6.2: second check valve
- 7: multi-circuit protection valve
- 8.1: first check valve-throttle assembly
- 8.2: second check valve-throttle assembly
- 9: regeneration valve
- 10: silencer
- 11: pneumatic system
- 12: 2/2 blocking valve
- 13: pneumatic consumer circuits
- 14: casing
- 15: commercial vehicle
- 16: valve chamber
- 16a: inner wall of the valve chamber 16
- 17: first spool valve outlet
- 18: second spool valve outlet
- 20: venting outlet
- 22: first piston
- 22a: front face of the first piston 22
- 22b: interior first piston chamber in the first piston 22
- 23: second piston
- 23a: front face of the second piston 23
- 23b: interior second piston chamber in the second piston 23
- 25: load spring
- 26: left end, outer end of the first piston 22
- 27: right end, outer end of the second piston 23
- 28: control air chamber 28
- 30: central valve chamber area
- 32: first air passage
- 33: second air passage
- 34: second regeneration air passage
- 35: first regeneration air passage
- 101: inlet port
- A: lateral piston axis
- AS1: first supply air stream
- AS2: second supply air stream
- AS3: second regeneration air stream
- p1: supply inlet
- p2: supply outlet
- p3: venting outlet
- p4: first pneumatic control port
- p4.1: regeneration port
- p6.1: second pneumatic control port
- SW: pneumatic control signal

## Claims

1. A twin chamber air dryer (1) for a pneumatic system (11) of a commercial vehicle (15), said twin chamber air dryer (1) comprising:
a casing (14),
a supply inlet (p1, 101) to be connected to a compressor (5),
a spool valve (2) comprising a first spool valve outlet (2c, 17) to be connected to a first cartridge inlet (3a) of a first cartridge (3) and a second spool valve outlet (2d, 18) to be connected to a second cartridge inlet (4a) of a second cartridge (4),
wherein a first air passage (32) is connecting said supply inlet (p1, 101) to said first spool valve outlet (2c, 17), and a second air passage (33) is connecting said supply inlet (p1, 101) to said second spool valve outlet (2d, 18),
wherein in a basic condition, said first air passage (32) is open and said second air passage (33) is closed, to form a first supply mode through said first cartridge (3),
and wherein in an actuated condition said second air passage (33) is open and said first air passage (32) is closed, to form a second supply mode through said second cartridge (4),
wherein in a high inlet pressure situation with an inlet pressure at said supply inlet (p1, 101) above a pressure threshold (pth), said supply inlet (p1, 101) is connected to said first spool valve outlet (2c, 17) and to said second spool valve outlet (2d, 18).

2. The twin chamber air dryer (1) according to claim 1, wherein said first regeneration air passage (35) and said second regeneration air passage (34) are closed in said high pressure situation.

3. The twin chamber air dryer (1) according to claim 1 or 2, wherein said casing (14) comprises a valve chamber (16), said valve chamber (16) being connected to said supply inlet (p1, 101) and containing a first piston (22) and a second piston (23),
said pistons (22, 23) contacting each other, being slidingly mounted and displaceable along a common piston axis (A), being spring loaded by a load spring (25) in a first direction, and being pushable by a control signal (SW) against said load spring (25), wherein said pistons (22, 23) forming in said valve chamber (16) a central valve chamber area (30) connected to said supply inlet (p1, 101), said first air passage (32) and said second air passage (33),
said first air passage (32) connecting said central valve chamber area (30) to said first spool valve outlet (17), and said second air passage (33) connecting said central valve chamber area (30) to said second spool valve outlet (18),
wherein in said basic condition said first air passage (32) is open and said second air passage (33) is closed, to form said first supply mode, and
wherein in said actuated condition said pistons (22, 23) are pushed by said control signal (SW) against said load spring (25), said first air passage (32) being closed and said second air passage (33) being open, to form a second supply mode.

4. The twin chamber air dryer (1) according to claim 3, wherein said pistons (22, 23) are hollow, said first piston (22) comprising an interior first piston chamber (22b) and said second piston (23) comprising an interior second piston chamber (23b),
said piston chambers (23b) being fluidly connected to said valve chamber (16).

5. The twin chamber air dryer (1) according to claim 3 or 4, wherein in said high inlet pressure situation said pistons (22, 23) are pushed apart thereby opening said first passage (32) to said first spool valve outlet (17) and said second passage (23) and to said second spool valve outlet (18).

6. The twin chamber air dryer (1) according to one of claims 3 to 5, wherein in said basic condition, said first piston (22) opens said first passage (32) and said second piston (23) closes said second passage (33), and
wherein in said actuated a basic condition, said first piston (22) closes said first passage (32) and said second piston (23) opens said second passage (33).

7. The twin chamber air dryer (1) according to to one of claims 3 to 6,
wherein a control air chamber (28) is received in said casing (14) and contacts a first end (26) of said first piston (22),
said second piston (23) comprises a second end (27) being loaded by said load spring (25),
wherein in said high inlet pressure situation, said first piston (22) is pushed to its first end (26) and said second piston (23) is pushed to said second end (27), against a spring force of said spring load (25).

8. The twin chamber air dryer (1) according to to one of claims 3 to 7, wherein said central valve chamber area (30), said first air passage (32), and said second air passage (33) are formed in said valve chamber (16)
- around said pistons (22, 23) and/or
- between said pistons (22, 23) and an inner wall (16a) of said valve chamber (16), and/or
- between said interior piston chambers (22b, 23b) of said pistons (22, 23) and said inner wall (16a) of said valve chamber (16).

9. The twin chamber air dryer (1) according to to one of claims 3 to 8, wherein
said casing (14) comprises a venting outlet (20),
wherein in a first regeneration air passage (35) is formed in said casing (14) between said first spool valve outlet (17, 2c) and said venting outlet (20),
wherein a second regeneration air passage (34) is formed in said casing (14) between said second spool valve outlet (18, 2d) and said venting outlet (20),
wherein in said basic condition, said first air passage (32) is open and said second air passage (33) is closed, to form said first supply mode, and
wherein in said actuated condition, said pistons (22, 23) are pushed by said control signal (SW) against said load spring (25), said first air passage (32) being closed and said second air passage (33) being open, to form a second supply mode.

10. The twin chamber air dryer (1) according to claim 9, wherein a silencer (10) is mounted on said casing (14) and connected to said venting outlet (20).

11. The twin chamber air dryer (1) according to one of the preceding claims, wherein said spool valve (2) is configured as a spring loaded 4/4 valve.

12. The twin chamber air dryer (1) according to one of the preceding claims, further comprising
a regeneration port (p4.1) to be connected to a multi-circuit protection valve (7),
a first check valve-throttle assembly (8.1) and a second check valve-throttle assembly (8.2), said first check valve-throttle assembly (8.1) being positioned between a first cartridge outlet (3b) of said first cartridge (3) and said regeneration port (p4.1), said second check valve-throttle assembly (8.2) being positioned between a second cartridge outlet (4b) of said second cartridge (4) and said regeneration port (p4.1).

13. The twin chamber air dryer (1) according to the claim 12, wherein a first check valve (6.1) is provided between said first cartridge outlet (3b) and said supply outlet (p2), and
a second check valve (6.2) is provided between said second cartridge outlet (4b) and said supply outlet (p2).

14. Pneumatic system (11) of a commercial vehicle (15), said pneumatic system (11) comprising
a twin chamber air dryer (1) according to one of the preceding claims,
a compressor (5) for supplying compressed air to said twin chamber air dryer (1), pneumatic consumer circuits (13), and
a multi-circuit protection valve (7) connected to said twin chamber air dryer (1), for supplying compressed air to said pneumatic consumer circuits (13),
said twin chamber air dryer (1) being operatable in said first supply mode and said second supply mode.
